# EUROPÄISCHE PATENTSCHRIFT

(11) **EP 2 915 091 B1**
(45) Veröffentlichungstag und Bekanntmachung des Hinweises auf die Patenterteilung: **07.12.2016**
(21) Anmeldenummer: 13785858.5
(22) Anmeldetag: 31.10.2013
(51) Int. Cl.: G06F 21/55, G06F 21/62

(54) **VERFAHREN ZUM GESCHÜTZTEN HINTERLEGEN VON EREIGNISPROTOKOLL-DATEN EINES COMPUTERSYSTEMS, COMPUTERPROGRAMMPRODUKT SOWIE COMPUTERSYSTEM**
METHOD FOR THE PROTECTED DEPOSIT OF EVENT PROTOCOL DATA OF A COMPUTER SYSTEM, COMPUTER PROGRAMME PRODUCT AND COMPUTER SYSTEM
PROCÉDÉ D'ENREGISTREMENT PROTÉGÉ DE DONNÉES DE PROTOCOLES D'ÉVÉNEMENTS D'UN SYSTÈME INFORMATIQUE, PRODUIT DE PROGRAMME INFORMATIQUE ET SYSTÈME INFORMATIQUE

(30) Priorität: 02.11.2012 DE 102012110510
(43) Veröffentlichungstag der Anmeldung: 09.09.2015
(73) Patentinhaber: Fujitsu Technology Solutions Intellectual Property GmbH, 80807 München (DE)
(72) Erfinder: CLAES, Heinz-Josef, 61130 Nidderau (DE)
(74) Vertreter: Epping - Hermann - Fischer
(86) Internationale Anmeldenummer: PCT/EP2013/072801
(87) Internationale Veröffentlichungsnummer: WO 2014/068051

(56) Entgegenhaltungen:
- US-A- 5 032 979
- US-A1- 2005 071 650
- US-A1- 2007 011 746

## Beschreibung

Die Erfindung betrifft ein Verfahren zum geschützten Hinterlegen von Ereignisprotokoll-Daten eines Computersystems sowie ein Computerprogrammprodukt, enthaltend ein Computerprogramm, welches bei Ablauf auf einem Computersystem ein derartiges Verfahren durchführt. Ferner betrifft die Erfindung ein Computersystem, welches ausgebildet ist, ein derartiges Verfahren durchzuführen.

Systembetreuer oder Administratoren verfügen über Zugriffsmöglichkeiten auf die Hardware bzw. Zugriffsrechte auf die Software eines Computersystems, um das Computersystem zu warten und zu verwalten, sodass ein fehlerfreier Betrieb des Computersystems bzw. eine fehlerfreie Benutzung des Computersystems durch Endnutzer gewährleistet ist. Problematisch ist, dass die erweiterten Zugriffsrechte von Systembetreuern oder Administratoren generell auch einen Zugriff auf persönliche bzw. vertrauliche Daten ermöglichen, die auf dem betriebenen Computersystem gespeichert sind. So haben Administratoren beispielsweise die Möglichkeit, vertrauliche Daten von Endnutzern zu lesen.

Übliche Ansätze, um die Vertraulichkeit von Informationen bzw. den Datenschutz im Allgemeinen zu gewährleisten, sind dadurch gegeben, dass bestimmte Vorschriften (Prozesse, die eingehalten werden sollen) und Regeln (Ge- bzw. Verbote) zwischen den einzelnen Benutzergruppen eines Computersystems zum Beispiel vertraglich festgelegt sind. Problematisch bei diesen Ansätzen ist jedoch, dass Benutzergruppen mit erweiterten Zugriffsrechten, zum Beispiel Mitarbeiter eines Software-Dienstleistungsunternehmens, kriminell sein können, erpresst oder bestochen werden. Somit sind technische Maßnahmen erforderlich, welche den Zugriff auf vertrauliche Daten innerhalb eines Computersystems verhindern.

Insbesondere können so genannte Ereignisprotokoll-Daten bzw. Log-Daten Gegenstand eines unerlaubten Zugriffs durch Systembetreuer oder Administratoren sein. Ereignisprotokoll-Daten werden kontinuierlich oder in vorbestimmten Zeitabständen von bestimmten Instanzen (Applikationen, Systemprogramme, Systemhardware, etc.) in einem Computersystem erzeugt und in einem Speicher des Computersystems abgelegt.

Die Ereignisprotokoll-Daten können beispielsweise Informationen über bestimmte Systemzustände des Computersystems, gegebenenfalls vorbestimmte Fehlerprotokolle, enthalten, die für einen Systembetreuer oder Administrator bestimmt sind. Andererseits können die Ereignisprotokoll-Daten auch Informationen enthalten, die zum Beispiel einem bestimmten Endnutzer als Informationen zuzuordnen sind, zum Beispiel bestimmte Geschäftsvorgänge, persönliche Kundendaten, Kreditkartennummern, etc. In der Regel sind die letztgenannten Informationen vertraulich und nur für den jeweiligen Endnutzer bzw. aus Gründen einer möglichen Nachvollziehbarkeit für beschränkte Personengruppen, zum Beispiel für Kundenbetreuer, bestimmt. Auch aus rechtlichen Gründen, zum Beispiel aus Ermittlungsgründen durch Polizei oder Staatsanwaltschaft, ist eine Nachvollziehbarkeit bestimmter Vorgänge im Computersystem oftmals erforderlich. Generell soll jedoch ein Zugriff eines Systembetreuers bzw. eines Administrators auf die vertraulichen Kundeninformationen unterbunden werden.

Technische Maßnahmen einer Verschlüsselung von Ereignisprotokoll-Daten erlauben nur einen begrenzten bzw. umgehbaren Zugriffsschutz, weil die Daten durch kundige Benutzer entschlüsselt bzw. rekonstruiert werden können oder durch geeignete Maßnahmen während ihrer Verarbeitung im Computersystem (beispielsweise im Prozessorkern des Computersystems) in unverschlüsselter Form vorliegen. Maßnahmen einer Verschlüsselung der Ereignisprotokoll-Daten sind folglich allein nicht ausreichend, um einen erhöhten Datenschutz zu gewährleisten. Auch weitergehende Schutzmaßnahmen für einen geschützten Zugriff auf Audit- bzw. Eventprotokolldateien, wie sie beispielhaft in den Druckschriften US 5 032 979 A, US 2007/011746 A1 sowie US 2005/071650 A1 erläutert werden, sind hinsichtlich eines selektiven Schutzes vertraulicher Informationen unzureichend.

Der Erfindung liegt somit die Aufgabe zugrunde, ein Verfahren, ein Computerprogrammprodukt sowie ein Computersystem aufzuzeigen, welche durch technische Maßnahmen ein geschütztes Hinterlegen von Ereignisprotokoll-Daten eines Computersystems ermöglichen und einen verbotenen Zugriff auf vertrauliche Informationen unterbinden.

Diese Aufgabe wird in einem ersten Aspekt durch ein Verfahren der eingangs genannten Art gelöst, wobei eine Zugriffssteuerung bereitgestellt wird, welche einen Zugriff auf die Ereignisprotokoll-Daten im Computersystem verbietet und zudem folgende Schritte durchführt:
- Lesen von Ereignisprotokoll-Daten, die im Computersystem erzeugt werden,
- sequentielles Zuordnen einzelner Datenabschnitte der gelesenen Ereignisprotokoll-Daten zu einer von wenigstens zwei Kategorien in Abhängigkeit vorbestimmter Kriterien,
- Zusammenführen der kategorisierten Datenabschnitte jeweils einer Kategorie zu Unterdaten,
- separates Ablegen aller erstellten Unterdaten sowie
- Einrichten einer spezifischen Zugriffsmöglichkeit separat für die jeweiligen Unterdaten in Abhängigkeit vorbestimmter Benutzergruppen.

Ein derartiges Verfahren ermöglicht das Auftrennen erzeugter Ereignisprotokoll-Daten in unterschiedliche Kategorien, wobei bestimmte Informationen in den Ereignisprotokoll-Daten diesen vorbestimmten Kategorien zugeordnet und als Unterdaten abgelegt werden. Ein genereller Zugriff auf die ursprünglich erzeugten Ereignisprotokoll-Daten als Rohdaten im Computersystem ist durch die Zugriffssteuerung verhindert. Vorbestimmten Benutzern ist nur ein spezifischer separater Zugriff auf die jeweils kategorisierten Informationen der erstellten Unterdaten erlaubt.

Vorteilhaft können auf diese Weise bestimmte Informationen aus den Ereignisprotokoll-Daten bestimmten Zugriffsmodalitäten bzw. Zugriffsmöglichkeiten zugeordnet oder vorenthalten werden. Der Vorteil eines derartigen Verfahrens besteht somit darin, dass nur bestimmte Informationen bestimmten Nutzern oder Nutzergruppen zugänglich sind. So ist es denkbar, dass eine erste Benutzergruppe ausschließlich auf erste Unterdaten mit Informationen einer ersten vorgegebenen Kategorie Zugriff hat, während eine zweite Benutzergruppe ausschließlich auf zweite Unterdaten mit Informationen einer von der ersten Kategorie unterschiedlichen zweiten Kategorie Zugriff besitzt. Alternativ oder zusätzlich dazu ist es möglich, eine dritte Benutzergruppe vorzusehen, welche auf mehrere oder alle erstellten Unterdaten Zugriff hat.

So ist es denkbar, dass Ereignisprotokoll-Daten, welche beispielsweise sowohl Informationen über bestimmte Systemzustände als auch Informationen über Kundendaten enthalten, durch das erläuterte Verfahren in eine Kategorie "Systemzustände" und in eine andere Kategorie "Kundendaten" aufgetrennt werden. Die Ereignisprotokoll-Daten sind nicht auf derartige Informationen beschränkt. Es können auch andere Informationen, welche im Rahmen eines Betriebs eines Computersystems anfallen, aufgenommen sein. Die Datenabschnitte mit Informationen über die Systemzustände können als eine Kategorie von Unterdaten und die Datenabschnitte mit Informationen über die Kundendaten können eine andere Kategorie von Unterdaten zusammengeführt und separat abgelegt, das heißt gespeichert, werden. Den erstellten Unterdaten können unterschiedliche Zugriffsmöglichkeiten bzw. Zugriffsrechte zugeordnet werden. Auf diese Weise erhalten nur vorbestimmte Benutzer auch tatsächlich Zugriff auf die ihnen vorbestimmten Informationen.

Beispielsweise können Endkunden bzw. Kundenbetreuer auf die Kategorie "Kundendaten" zugreifen, während Systembetreuer bzw. Administratoren auf die Kategorie "Systemzustand" Zugriff haben. Auf diese Weise kann eine zuverlässige Systembetreuung des Computersystems bei gleichzeitig technisch erhöhtem Datenschutz vertraulicher Informationen gewährleistet werden.

Es ist auch denkbar, dass Ereignisprotokoll-Daten nur Datenabschnitte einer Kategorie enthalten. Auch in diesem Fall kann das obige Verfahren angewendet werden, wobei dann sämtliche Datenabschnitte dieser einen Kategorie zugeordnet werden. Dies stellt z.B. einen Fall dar, bei dem sämtliche Informationen für eine bestimmte Benutzergruppe zugänglich sind. Entscheidend ist jedoch, dass überhaupt ein sequentielles Lesen und Kategorisieren der Ereignisprotokoll-Daten durchgeführt wird und somit auch bei nur einer Kategorie die Möglichkeit des Auftrennens von Datenabschnitten unterschiedlicher Kategorien besteht. Die kategorisierten Datenabschnitte können entsprechend verschlüsselt werden.

Der Begriff "Unterdaten" soll in diesem Kontext verstanden werden als Daten einer Kategorie, welche über die Zugriffssteuerung aus den ursprünglichen Ereignisprotokoll-Daten herausgetrennt wurden. Die Unterdaten können als fortlaufender Datenstrom vorliegen und entsprechend hinterlegt oder gespeichert werden. Es ist alternativ oder ergänzend dazu auch möglich, dass die erstellten Unterdaten als "Unterdateien", d.h. Dateien einer vorbestimmten Kategorie abgelegt (also gespeichert) oder über Netzwerk versendet werden.

Das erläuterte Verfahren kann beispielsweise vermittels einer Zugriffssteuerung in einem Computersystem durchgeführt werden, welche als so genannter Log-Konverter arbeitet. Der Log-Konverter kann beispielsweise als Systemsoftware oder aber auch innerhalb eines Microcontroller-Bausteins als logisches Ablaufprogramm oder als eine Kombination von beidem implementiert sein. Die Zugriffssteuerung kann als Zugriffssteuereinheit ausschließlich im Computersystem integriert sein, welches die zu verarbeitenden Ereignisprotokoll-Daten vorhält. Es ist aber auch denkbar, dass die Zugriffssteuerung mehrere Teilprogramme oder Software-Agenten oder Microcontroller umfasst, die auf mehreren Computersystemen innerhalb einer Computernetz-Infrastruktur eingerichtet sind, um ein Verarbeiten der Ereignisprotokoll-Daten sowie einen Zugriff auf die erstellten Kategorien von Unterdaten zu ermöglichen.

Der Log-Konverter führt die erläuterten Verfahrensschritte automatisiert durch. Das bedeutet, dass Ereignisprotokoll-Daten an den Log-Konverter zum Einlesen übergeben werden oder direkt vom Log-Konverter an vorbestimmten Schnittstellen im Computersystem abgegriffen werden, beispielsweise während des Schreibevorgangs der Ereignisprotokoll-Daten auf einen Speicher im Computersystem. Anschließend überprüft der Log-Konverter sequentiell die einzelnen Datenabschnitte der gelesenen Ereignisprotokoll-Daten und ordnet die Datenabschnitte anhand vorbestimmter Kriterien einzelnen Kategorien zu. Schließlich werden die kategorisierten Datenabschnitte in die jeweiligen Unterdaten zusammengeführt und diese abgelegt. Somit sind die Informationen aus den Ereignisprotokoll-Daten in Abhängigkeit der vorbereiteten Kategorien entsprechend kanalisiert.

Eine Anwendungsmöglichkeit des erläuterten Verfahrens ist vorteilhaft innerhalb einer abgesicherten bzw. geschützten Computernetz-Infrastruktur, so genannte "Sealed Infrastructure", möglich. In einer derartigen Infrastruktur kann ein Computersystem generell derart eingekapselt sein, dass ein Zugriff auf bestimmte oder alle Daten in diesem Computersystem (das heißt ein logischer Zugriff auf das Computersystem) und/oder ein mechanischer Zugriff auf die Hardware des Computersystems (das heißt ein physischer Zugriff) nicht oder nur eingeschränkt möglich sind. Derartige Systeme können so eingerichtet sein, dass nur vorbestimmte Daten und Informationen vom System unidirektional nach außen innerhalb einer Netzwerk-Struktur weitergegeben werden. Insbesondere das Aufzeichnen und Hinterlegen von Ereignisprotokoll-Daten innerhalb eines Computersystems, was bisher die Gefahr eines unerlaubten Zugriffs auf vertrauliche Informationen mit sich brachte, kann auf diese Weise durch das erläuterte Verfahren verbessert werden, weil der Zugriff auf die ursprünglichen Ereignisprotokoll-Daten verboten und ein Zugriff auf vorbestimmte Informationen durch vorbestimmte Benutzergruppen kanalisiert und eingeschränkt werden kann.

Vorteilhaft können die erstellten Unterdaten bzw. Unterdateien lokal im Computersystem gespeichert und/oder über eine Netzwerk-Infrastruktur an ein weiteres Computersystem verteilt werden. Das bedeutet, dass je nach Zugriffsschutz bzw. -rechten ein eingeschränkter Zugriff auf das Computersystem zum Abholen lokal gespeicherter Unterdaten möglich ist, die Unterdaten oder Unterdateien automatisiert an andere Computersysteme verteilt werden oder ein Zugriff auf das Computersystem generell unterbunden wird, wobei ein Zugriff auf erstellte Unterdaten lediglich über ein Netzwerk an einer vorbestimmten Stelle im Netzwerk ungleich des Computersystems erlaubt ist, z.B. ein anderes Computersystem.

Vorteilhaft werden die erstellten Unterdaten zumindest einer Kategorie verschlüsselt. Bevorzugt werden alle erstellten Unterdaten aller Kategorien verschlüsselt. Zur Verschlüsselung kann sich der Fachmann dabei gängigen Methoden der Kryptographie bedienen, beispielsweise die Vergabe von öffentlichen und privaten Schlüsseln für vorbestimmte Benutzerkreise einrichten (z.B. PGP mit RSA oder DH/DSS) oder aber auch alternativ oder in Ergänzung dazu verschlüsselte Übertragungskanäle innerhalb eines Computernetzwerks vorsehen, zum Beispiel gemäß dem so genannten "Transport Layer Security"-Standard (TLS).

Vorteilhaft werden die einzelnen Datenabschnitte der Ereignisprotokoll-Daten anhand wenigstens eines der folgenden Kriterien kategorisiert:
- Spezifische syntaktische Anweisungen,
- Zeitstempel,
- vordefinierte Begriffe,
- Pattern, d.h. vorbestimmte interpretierbare "Muster" innerhalb der Datenabschnitte,
- Variablen,
- Datentypen.

Die genannten Kriterien bilden Bewertungsmöglichkeiten, um eingelesene Datenabschnitte in die vordefinierten Kategorien einzuordnen. So ist es beispielsweise möglich, dass eine Zugriffssteuerung der oben erläuterten Art beim Einlesen von Ereignisprotokoll-Daten eine Interpretation der Daten hinsichtlich wenigstens eines der oben genannten Kriterien durchführt. Dies kann ähnlich einer Analyse mittels eines lexikalischen Scanners (Lexer) erfolgen. Wird eines der genannten Kriterien als Datenmuster erkannt, so kann dieses Datenmuster mittels einer logischen Verarbeitung einer bestimmten Kategorie zugeordnet werden.

Eine Zugriffssteuerung der erläuterten Art scannt die einzelnen Datenabschnitte der Ereignisprotokoll-Daten sequentiell ab, interpretiert sie und ordnet diese anhand der erkannten Kriterien den vorbestimmten Kategorien zu. Beispielsweise könnte der Begriff "Log-On" gefolgt von einem Zeitstempel in einen Datenabschnitt der Ereignisprotokoll-Daten die Zugriffssteuerung erkennen lassen, dass es sich bei dem Datenabschnitt um einen Systemvorgang, nämlich z.B. um einen Log-On-Vorgang eines Benutzers am Computersystem, handelt. Folglich wird die Zugriffssteuerung diesen Datenabschnitt einer Kategorie "Systemzustand" (siehe oben) zuordnen.

Andererseits könnte beispielsweise der Begriff "Mastercard" gefolgt von vordefinierten Variablen bzw. Zahlenfolgen die Zugriffssteuerung erkennen lassen, dass es sich bei diesem Datenabschnitt um einen aufgezeichneten Kundenvorgang (zum Beispiel einen Bestellvorgang) handelt, sodass die Zugriffssteuerung diesen Datenabschnitt einer Kategorie "Kundendaten" (siehe oben) zuordnet. Nachdem die vorgenannten Datenabschnitte unterschiedlichen Kategorien zugeordnet wurden, können sie somit auch für unterschiedliche Benutzergruppen kanalisiert und in ihrem Zugriff aufgetrennt werden.

So ist es beispielsweise denkbar, dass nur die Benutzergruppe der Systembetreuer oder Administratoren die Informationen über den spezifischen Log-On-Vorgang, die Endkunden oder Kundenbetreuer nur die Informationen über den getätigten Benutzervorgang aus entsprechenden Unterdaten abrufen können. Die jeweils andere Benutzergruppe hat auf die ihr verbotenen Unterdaten keinen Zugriff.

Vorteilhaft sind die einzelnen Kategorien durch unterschiedliche Benutzergruppen und/oder unterschiedliche Zugriffsrechte auf das Computersystem definiert. Wie bereits erläutert, können die Kategorien beispielsweise nach Systembetreuer bzw. Administratoren und Nutzerbetreuer bzw. Endnutzer, zum Beispiel Kundenbetreuer und Kunden, definiert werden. Es ist aber auch denkbar, dass den Benutzern einer vorbestimmten Benutzergruppe unterschiedliche Zugriffsrechte vergeben werden. So kann es beispielsweise bei Endnutzern diejenigen mit erweiterten Zugriffsrechten und diejenigen mit eingeschränkten Zugriffsrechten geben. Diese Zugriffsrechte können einen spezifischen Zugriff auf entsprechende Unterdateien der aufgetrennten Ereignisprotokoll-Daten festlegen.

In weiteren Aspekten wird die Erfindung durch ein Computerprogrammprodukt bzw. ein Computersystem gelöst. Das Computerprogrammprodukt enthält ein Computerprogramm, welches bei Ablauf auf einem Computersystem ein Verfahren der erläuterten Art durchführt.

Das Computersystem weist eine Zugriffssteuereinheit zum gesteuerten Zugriff auf Ereignisprotokoll-Daten des Computersystems auf, wobei die Zugriffssteuereinheit dazu ausgebildet ist, ein Verfahren der erläuterten Art durchzuführen.

Vorteilhafte Weiterbildungen bzw. weitere Aspekte der Ausführung sind in den Unteransprüchen sowie in der nachfolgenden Figurenbeschreibung offenbart. Die bereits erläuterten Aspekte werden nun näher anhand mehrerer Zeichnungen erläutert.

Es zeigen:
- Figur 1: eine schematisierte Darstellung einer Computernetz-Infrastruktur zur Implementierung eines erfindungsgemäßen Verfahrens und
- Figur 2: eine schematisierte Darstellung einer Kategorisierung von Ereignisprotokoll-Daten gemäß einem erfindungsgemäßen Verfahren.

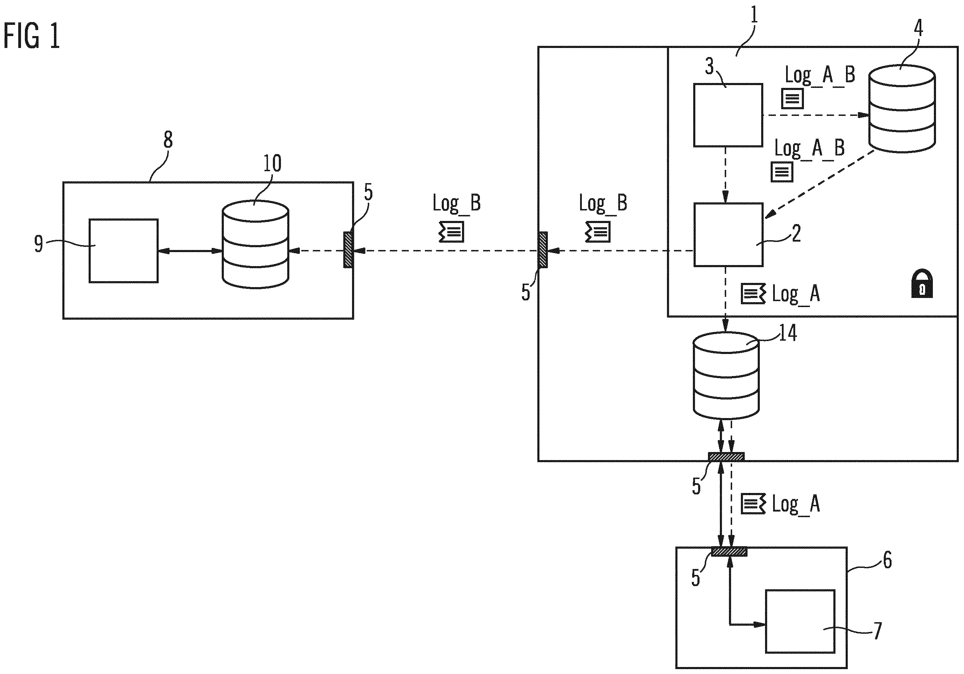

Figur 1 zeigt eine schematisierte Darstellung einer Computernetz-Infrastruktur zur Implementierung eines erfindungsgemäßen Verfahrens zum geschützten Hinterlegen von Ereignisprotokoll-Daten. Die Computernetz-Infrastruktur umfasst gemäß Figur 1 beispielhaft drei Computersysteme, nämlich ein erstes Computersystem 1, ein Client-Computersystem 8 sowie ein Administrator-Computersystem 6. Diese Konfiguration ist lediglich beispielhaft, wobei die Computernetz-Infrastruktur noch weitere Computersysteme, insbesondere weitere Client-Computersysteme, oder eine andere Konfiguration umfassen kann.

Das Computersystem 1 bildet das zentrale System der Infrastruktur. Das Computersystem 1 kann beispielsweise einen Rechen- oder Datenserver eines Dienstleistungsunternehmens umfassen, wobei wenigstens ein Anwendungs- oder Systemprogramm 3 innerhalb einer geschützten bzw. eingekapselten Systemstruktur des Computersystems 1 (gekennzeichnet durch ein Schloss-Symbol) ausführbar ist. Es ist aber auch möglich, dass die Komponente 3 gemäß Figur 1 beispielsweise einen Prozessorkern, eventuell kombiniert mit einem Arbeitsspeicher, umfasst. Generell soll die Komponente 3 im Computersystem 1 verstanden werden als eine Komponente, die im laufenden Betrieb des Computersystems 1 vorbestimmte Ereignisprotokoll-Daten Log_A_B erzeugt.

Diese Ereignisprotokoll-Daten Log_A_B stellen ein Protokoll aller Ereignisse in der geschützten Systemstruktur des Computersystems 1 dar. So können die Ereignisprotokoll-Daten Log_A_B zum Beispiel Systemvorgänge (mögliche Zugriffe auf das Computersystem 1, Zustände laufender Betriebssysteminstanzen oder virtueller Maschinen, Hardwareressourcen-Vorgänge, etc.) sowie bestimmte vertrauliche Benutzerinformationen (Benutzernamen, Informationen über Geschäftsvorgänge oder elektronischen Zahlungsverkehr, Kennwörter, sonstige private Daten, etc.) umfassen. Die Ereignisprotokoll-Daten Log_A_B sind jedoch nicht auf derartige Informationen beschränkt. Es können auch andere Informationen, welche im Rahmen eines Betriebs des Computersystems 1 anfallen, aufgenommen sein.

Entscheidend im Kontext des in Figur 1 dargestellten Systems ist die Tatsache, dass die Ereignisprotokoll-Daten Log_A_B, welche in der Einheit 3 erzeugt werden, in ihrer erzeugten ursprünglichen Form ausschließlich in der geschützten bzw. eingekapselten Systemstruktur (siehe Schloss) des Computersystems 1 vorgehalten werden. So können die Ereignisprotokoll-Daten Log_A_B beispielsweise von der Einheit 3 in einen ersten Speicher 4 des Computersystems 1 innerhalb der geschützten Systemumgebung geschrieben und dort abgelegt werden. Ferner können die Ereignisprotokoll-Daten Log_A_B entweder direkt von der Einheit 3 an eine Zugriffssteuereinheit 2 übergeben oder alternativ von der Zugriffssteuereinheit 2 aus dem ersten Speicher 4 des Computersystems 1 ausgelesen werden. Dies ist durch zwei alternative Pfade zwischen der Einheit 3 und der Zugriffssteuereinheit 2 bzw. zwischen dem ersten Speicher 4 und der Zugriffssteuereinheit 2 verdeutlicht.

Es ist aber auch denkbar, den Speicher 4 außerhalb der geschützten Systemstruktur anzuordnen, wobei in diesem Falle die Ereignisprotokoll-Daten Log_A_B in verschlüsselter Form gespeichert sind, um einen Zugriff auf die Ereignisprotokoll-Daten Log_A_B zu verhindern. Es ist denkbar, dass die Ereignisprotokoll-Daten Log_A_B von der Zugriffssteuereinheit 2 verschlüsselt werden.

Die Zugriffssteuereinheit 2 kann beispielsweise einen so genannten Log-Konverter zur Verarbeitung der Ereignisprotokoll-Daten Log_A_B umfassen, dessen Arbeitsweise später erläutert wird. Auch die Zugriffssteuereinheit 2 ist innerhalb der geschützten Systemstruktur bzw. Systemumgebung des Computersystems 1 befindlich.

Die geschützte Systemstruktur des Computersystems 1 kann beispielsweise eine so genannte "Sealed Infrastructure" sein. Das bedeutet, dass ein Zugriff von Nutzern innerhalb des Gesamtsystems von außen auf die geschützte Systemstruktur des Computersystems 1, insbesondere gemäß der Konfiguration in Figur 1 auf die Komponenten 2, 3 und 4 nicht oder nur stark eingeschränkt möglich ist. So kann beispielsweise ein Zugriff auf die geschützte Systemstruktur von außen generell verboten sein. In diesem Falle arbeiten ausführende Anwendungs- oder Systemkomponenten 2, 3, 4 innerhalb des Computersystems 1 während des Betriebs des Systems eigenständig ohne Zugriffs- bzw. Eingriffsmöglichkeit von außen.

In einem anderen alternativen Fall kann jedoch ein begrenzter Zugriff auf die geschützte Systemstruktur des Computersystems 1, insbesondere auf ausgewählte Komponenten und Einheiten innerhalb der geschützten Systemstruktur vorbereitet sein. So ist es denkbar, dass ein Nutzer des Gesamtsystems beispielsweise auf einzelne Komponenten der Einheit 3, zum Beispiel Anwendungs- oder Systemprogramme, Zugriff hat, um diese auszuführen, für andere Nutzer zu betreuen oder zu warten. Ein Zugriff auf andere Komponenten, wie beispielsweise auf Daten im ersten Speicher 4, kann einem derartigen Nutzer jedoch verboten sein.

Allen denkbaren Ausführungsformen ist gemein, dass ein Zugriff auf die erzeugten Ereignisprotokoll-Daten Log_A_B in der geschützten bzw. eingekapselten Systemstruktur generell verboten ist. Dies wird durch die Zugriffssteuereinheit 2 sichergestellt. Die Ereignisprotokoll-Daten Log_A_B können, wie bereits erläutert, unterschiedlichste Informationen enthalten, die vertraulich und damit nur für vorbestimmte Nutzer zugänglich sein sollen. Auf diese Weise wird unterbunden, dass ein nicht autorisierter Nutzer Zugriff zu Informationen in den Ereignisprotokoll-Daten Log_A_B erhält, welche nicht für ihn bestimmt sind.

Ein Zugriffsschutz auf die geschützte bzw. eingekapselte Systemstruktur des Computersystems 1 kann beispielsweise dadurch bewerkstelligt sein, dass sämtliche Eingangsschnittstellen von außen nicht ansprechbar sind (so genanntes Port-Filtering) oder die einzelnen Komponenten innerhalb der geschützten Systemstruktur einen Zugriff protokollunterstützt verweigern (beispielsweise Unterdrücken eines Informationsaustausches auf der Übertragungsschicht eines Übertragungsprotokolls).

Nachfolgend soll nun die Arbeitsweise der Zugriffssteuereinheit 2 innerhalb der geschützten Systemstruktur des Computersystems 1 erläutert werden.

Die Ereignisprotokoll-Daten Log_A_B werden, wie bereits erläutert, an die Zugriffssteuereinheit 2 übergeben oder von der Zugriffssteuereinheit 2 entsprechend aus der Komponente 3 bzw. aus dem ersten Speicher 4 abgegriffen. Die Zugriffssteuereinheit 2 liest anschließend die Ereignisprotokoll-Daten Log_A_B ein und ordnet sequentiell einzelne Datenabschnitte der Ereignisprotokoll-Daten Log_A_B einer von beispielhaft zwei Kategorien A und B in Abhängigkeit vorbestimmter Kriterien zu. Die vorbestimmten Kriterien können beispielsweise derart gewählt sein, dass bestimmte Informationen der Ereignisprotokoll-Daten Log_A_B, zum Beispiel Systeminformationen, einer Kategorie A (Administratoren) und andere Informationen der Ereignisprotokoll-Daten, zum Beispiel Benutzerinformationen, einer zweiten Kategorie B (Benutzer) zugeordnet werden.

Anschließend werden die kategorisierten Datenabschnitte in der Zugriffssteuereinheit 2 in entsprechende Unterdaten aufgeteilt, welche den vorgegebenen Kategorien A und B entsprechen. Das bedeutet, dass die Zugriffssteuereinheit 2 z.B. Unterdaten Log_A einer Kategorie A und Unterdaten Log_B einer Kategorie B mit den jeweils zugeordneten Informationen erzeugt. Abschließend können die erzeugten Unterdaten z.B. als Unterdateien entsprechend abgelegt werden, sodass nur autorisierte Benutzer jeweils Zugriff auf die einzelnen Unterdateien erhalten.

In Figur 1 ist dies dadurch dargestellt, dass die Unterdatei Log_A von der Zugriffssteuereinheit 2 an einen zweiten Speicher 14 des Computersystems 1 übergeben und dort (gegebenenfalls in verschlüsselter Form) abgelegt wird, wobei der zweite Speicher 14 hier beispielhaft außerhalb der geschützten Systemstruktur, aber innerhalb des Computersystems 1 angeordnet ist. Es ist jedoch auch denkbar, die Daten bzw. Dateien Log_A verschlüsselt ohne ein konkret angesprochenes Zielcomputersystem auf das Netzwerk zu transferieren (Broadcast) oder den zweiten Speicher 14 außerhalb des Computersystems 1 in einem weiteren Computersystem bzw. in einem Zielcomputersystem vorzusehen. Die im zweiten Speicher 14 abgelegte Unterdatei Log_A kann dann beispielsweise über das Administrator-Computersystem 6 und einem darin eingerichteten Administrator-Tool 7 (welches Bestandteil einer Zugriffssteuerung vermittels der Zugriffssteuereinheit 2 sein kann) durch entsprechende Kommunikation über Eingangs- und Ausgangsschnittstellen 5 abgerufen werden.

Auf diese Weise kann ein Administrator über das Administrator-Computersystem 6 die für seine Benutzergruppe vorbestimmte Unterdatei Log_A aus dem Computersystem 1 laden und anschließend auswerten. Dabei ist es denkbar, dass über das Administrator-Computersystem 6 beispielsweise ein eingeschränkter Zugriff auf weitere Komponenten des Computersystems 1 neben dem zweiten Speicher 14 eingerichtet ist, um zum Beispiel der geschützten Systemstruktur, insbesondere einer Systemeinheit 3 bestimmte Befehle anzuweisen, zum Beispiel eine Reset- oder Restart-Routine durchzuführen. Ein Zugriff auf die ursprünglichen Ereignisprotokoll-Daten Log_A_B durch das Administrator-Computersystem 6 ist jedoch vermittels der Zugriffssteuereinheit 2 ausgeschlossen, wie bereits erläutert.

Zusätzlich zum Weitertransport der Unterdatei Log_A kann in der Zugriffssteuereinheit 2 auch ein Weitertransport der anderen Unterdatei Log_B an ein Client-Computersystem 8 erfolgen, wie in Figur 1 dargestellt. Dabei wird die Unterdatei Log_B vom Computersystem 1 über Schnittstellenkommunikation 5 an das Client-Computersystem 8 übertragen und in einem dortigen Speicher 10 abgelegt. Anschließend kann eine Client-Applikation 9 (welche Bestandteil einer Zugriffssteuerung vermittels der Zugriffssteuereinheit 2 sein kann) auf den Speicher 10 zugreifen und die zweite Unterdatei Log_B öffnen, lesen und auswerten. Das Client-Computersystem 8 kann ebenfalls als geschützte Systemstruktur aufgebaut sein, sodass nur autorisierte Benutzer des Client-Computersystems 8 einen Zugriff auf die Unterdatei Log_B haben. Alternativ oder ergänzend kann der Speicher 10 auch außerhalb des Client-Computersystems 8 eingerichtet sein. In diesem Falle wird die Unterdatei Log_B bevorzugt verschlüsselt abgespeichert, um einen unautorisierten Zugriff zu unterbinden.

Ein Zugriff der Benutzer des Client-Computersystems 8 auf die Unterdatei Log_A, welche an das Administrator-Computersystem 6 übertragen wurde, besteht nicht. Ein umgekehrter Zugriff von Benutzern des Administrator-Computersystems 6 auf die Unterdatei Log_B, welche an das Client-Computersystem 8 gesendet wurde, besteht ebenfalls nicht. Auf diese Weise ist sichergestellt, dass vorbestimmte Informationen, die nur für autorisierte Benutzer vorgesehen sind, auch nur an die jeweiligen Benutzergruppen (Clients B bzw. Administratoren A) weitergegeben werden. Ein Zugriff auf die ursprünglichen Ereignisprotokoll-Daten Log_A_B in der geschützten Systemstruktur des Computersystems 1 (siehe Schloss) wird durch die Zugriffssteuereinheit 2 verhindert.

Sämtliche Übertragungen der Unterdateien Log_A und Log_B von der Zugriffssteuereinheit 2 im Computersystem 1 an die einzelnen weiteren Computersysteme 6 und 8 kann vorteilhaft in verschlüsselter Form erfolgen. Zur Verschlüsselung bzw. Entschlüsselung kann sich der Fachmann dabei unterschiedlichster Kryptotechniken bzw. Verschlüsselungsalgorithmen bedienen, beispielsweise durch Vergabe öffentlicher und privater Schlüssel. Eine Verschlüsselung kann, wie bereits erläutert, bevorzugt vermittels der Zugriffssteuereinheit 2 erfolgen.

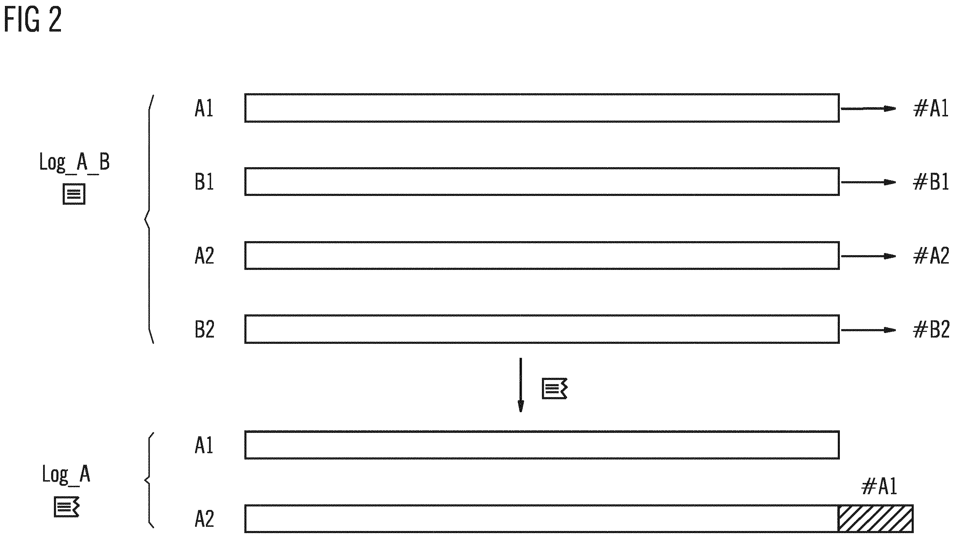

Figur 2 zeigt beispielhaft eine Verarbeitung von Ereignisprotokoll-Daten Log_A_B innerhalb einer Zugriffssteuereinheit 2 gemäß Figur 1.

Die Ereignisprotokoll-Daten liegen beispielsweise als Textdatei vor, in der mehrere Zeileneinträge A1, B1, A2, B2, usw., eingetragen sind. Die einzelnen Zeileneinträge umfassen beispielhaft einerseits Informationen, die einen bestimmten Systemzustand widerspiegeln und für eine Erstbenutzergruppe vorgesehen sind (zum Beispiel Administratoren) und andererseits Informationen, die bestimmte Benutzerinformationen enthalten und somit für eine zweite Benutzergruppe (zum Beispiel Endnutzer) bestimmt sind. Demzufolge sind Zeileneinträge der Ereignisprotokoll-Daten Log_A_B entweder einer ersten Kategorie A oder einer zweiten Kategorie B zugehörig. In Figur 2 wechseln sich beispielhaft Zeileneinträge der ersten Kategorie A und der zweiten Kategorie B ab und bilden somit die Einträge A1, B1, A2, B2, usw.

Die Zugriffssteuereinheit 2 gemäß Figur 1 kann die einzelnen Zeileneinträge einlesen und anhand vorbestimmter Kriterien entweder der Kategorie A und/oder der Kategorie B zuordnen. Vorbestimmte Kriterien sind zum Beispiel spezifische syntaktische Anweisungen, Zeitstempel, vordefinierte Begriffe, Pattern, Variablen oder Datentypen. So kann beispielsweise der erste Zeileneintrag A1 eine Information über einen bestimmten Fehlercode "Error XYZ" enthalten. Anhand dieser Syntax bzw. vorgegebenen Begriffe erkennt die Zugriffssteuereinheit 2, dass es sich bei Eintrag A1 um einen Systemeintrag handelt und ordnet diesen Eintrag der Kategorie A zu.

Der Zeileneintrag B1 kann beispielsweise Informationen über Benutzer oder den elektronischen Geschäftsverkehr von Benutzern enthalten, zum Beispiel "Name: ABC, Kundennummer: 123". Anhand dieser Informationen erkennt die Zugriffssteuereinheit 2, dass es sich beim Zeileneintrag B1 um einen Benutzereintrag handelt, und ordnet diesen folgerichtig der Kategorie B zu. Dies geschieht mit den nachfolgenden Zeileneinträgen analog.

Anschließend werden sämtliche Zeileneinträge, d.h. Datenabschnitte, der Ereignisprotokoll-Daten Log_A_B entsprechend der jeweiligen Kategorie in Unterdaten, beispielhaft in eine Unterdatei zusammengeführt. Figur 2 verdeutlicht beispielhaft die Zusammenführung aller Zeileneinträge der Kategorie A in die Unterdatei Log_A, welche beispielhaft die Zeileneinträge A1 und A2 umfasst. Die Zusammenfassung in eine Unterdatei erfolgt nicht zwingend. Es ist auch denkbar, dass die kategorisierten Datenabschnitte als fortlaufender Datenstrom eingerichtet werden. Ein Zusammenfassen in Unterdateien kann beispielsweise an anderer Stelle im Gesamtsystem (beispielsweise in einem anderen Computersystem) erfolgen.

Zudem wird zu jedem Zeileneintrag A1, B1, A2, B2, usw., eine Prüfsumme #A1, #B1, #A2, #B2, usw., gebildet. Die Prüfsumme kann beispielsweise ein Hash-Wert eines jeweiligen Zeileneintrags umfassen, welcher den jeweiligen Zeileneintrag eineindeutig markiert. Ferner wird die Prüfsumme eines Datenabschnitts einem nachfolgenden Datenabschnitt der jeweiligen Kategorie angefügt. Dies ist in Figur 2 beispielhaft wiedergegeben, in dem die Prüfsumme #A1 des Zeileneintrags A1 in der Unterdatei Log_A an den Zeileneintrag A2 angefügt wurde. Ein entsprechender Zeileneintrag A3 würde dann die Prüfsumme #A2 des Zeileneintrags A2 erhalten, usw. Auf diese Weise wird eine so genannte verkettete Liste der Zeileneinträge A1, A2, usw., gebildet, sodass ein unbemerktes Löschen einzelnen Zeileneinträge verhindert wird.

Falls ein Zeileneintrag gelöscht wird, so stimmt die an den nächsten Zeileneintrag angehängte Prüfsumme (welche die Prüfsumme der gelöschten Zeile darstellt) nicht mehr mit der Prüfsumme des vorhergehenden, noch existierenden Zeileneintrags überein. Dies kann z.B. über die Zugriffssteuereinheit 2 oder die Client-Applikation 9 (siehe Figur 1) überprüft werden und stellt somit einen Marker dar, dass wenigstens ein Zeileneintrag gelöscht wurde. Auf diese Weise kann verhindert werden, dass nachträgliche Manipulationen an der erzeugten Unterdatei Log_A unbemerkt durchgeführt werden können. Somit wird zum Beispiel unterbunden, dass ein unautorisierter Benutzer einen bestimmten Systemvorgang startet, der ihm eigentlich nicht erlaubt ist (zum Beispiel ein Geschäftsvorgang mit einer gestohlenen Kreditkartennummer eines anderen Nutzers), wobei anschließend der verfängliche Zeileneintrag in der entsprechenden Unterdatei herausgelöscht wird. Denn durch die verkettete Liste wird das Herauslöschen bemerkt, sodass beispielsweise eine bestimmte Warnmeldung ausgegeben werden kann. Im Übrigen sind die ursprünglich erzeugten Ereignisprotokoll-Daten in der geschützten Systemstruktur des Computersystems 1 gemäß Figur 1 noch existent und können beispielsweise bei Hinweis auf Missbrauch von Behörden mit Sicherheitsaufgaben (Polizei oder Staatsanwaltschaft) ausgelesen werden. Es ist vorteilhaft, einen fortlaufenden Zähler für die einzelnen Zeileneinträge festzulegen, sodass gegebenenfalls die Anzahl der fehlenden Zeilen ermittelt werden kann.

Es ist ebenfalls denkbar, die einzelnen Zeileneinträge einer Unterdatei Log_A gemäß Figur 2 zu verschlüsseln, sodass auch die jeweilige Prüfsumme, zum Beispiel #A1, verschlüsselt ist. Dies hat den zusätzlichen Vorteil, dass auch Manipulationen an Zeileneinträgen durch nachträgliche Rekonstruktion einer entsprechenden Prüfsumme vermieden werden können, weil aufgrund der Verschlüsselung der tatsächliche Prüfsummenwert nur sehr schwer ermittelbar ist.

Durch zusätzliche oder alternative Generierung einer Zufallszahl, welche entweder der gesamten Unterdatei Log_A oder aber jedem Zeileneintrag A1, A2, usw., angehängt wird, kann die missbräuchliche Rekonstruktion oder Entschlüsselung der entsprechenden Unterdatei zusätzlich weiter geschützt bzw. erschwert werden. Hier können bekannte Arten der Erweiterung von Schlüssellängen, beispielsweise eine Erweiterung von 128 Bit auf 256 Bit, also Schlüssellängen von einigen Byte in Frage kommen.

Das erläuterte Verfahren sowie das erläuterte Gesamtsystem erlauben ein geschütztes Hinterlegen von Ereignisprotokoll-Daten eines Computersystems, wobei über eine Zugriffssteuerung die ursprünglich erzeugten Ereignisprotokoll-Daten in mehrere Unterdateien aufgespalten werden. Die einzelnen Unterdateien werden ausschließlich an autorisierte Benutzergruppen weitergegeben. Die weitergegebenen Daten werden dabei optional verschlüsselt. Ein Zugriff auf die ursprünglichen Ereignisprotokoll-Daten wird jedoch verboten. Dadurch ist es möglich, dass vertrauliche Informationen durch technische Mittel vor einem Zugriff unautorisierter Personen geschützt bleiben.

Die dargestellten Ausführungsformen sind lediglich beispielhaft gewählt, wobei insbesondere alternative Ausgestaltungsmöglichkeiten eines Gesamtsystems gemäß Figur 1 denkbar sind.

### Bezugszeichenliste

- 1: Computersystem
- 2: Zugriffssteuereinheit
- 3: Systemeinheit
- 4: erster Speicher im Computersystem
- 5: Eingangs-/Ausgangsschnittstelle
- 6: Administrator-Computersystem
- 7: Administrator-Tool
- 8: Client-Computersystem
- 9: Client-Applikation
- 10: Speicher im Client-Computersystem
- 14: zweiter Speicher im Computersystem
- Log_A_B: Ereignisprotokoll-Daten
- Log_A, Log_B: Unterdateien
- #A1, #A2, #B1, #B2: Prüfsumme
- A1, A2, B1, B2: Zeileneintrag in der Ereignisprotokoll-Daten
- A, B: Kategorie

## Patentansprüche

1. Verfahren zum geschützten Hinterlegen von Ereignisprotokoll-Daten (Log_A_B) eines Computersystems (1), wobei eine Zugriffssteuerung (2, 7, 9) bereitgestellt wird, welche einen Zugriff auf die Ereignisprotokoll-Daten (Log_A_B) im Computersystem (1) verbietet und zudem folgende Schritte durchführt:
- Lesen von Ereignisprotokoll-Daten (Log_A_B), die im Computersystem (1) erzeugt werden,
- Sequentielles Zuordnen einzelner Datenabschnitte (A1, A2, B1, B2) der gelesenen Ereignisprotokoll-Daten (Log_A_B) zu einer von wenigstens zwei Kategorien (A, B) in Abhängigkeit vorbestimmter Kriterien,
- Zusammenführen der kategorisierten Datenabschnitte (A1, A2, B1, B2) jeweils einer Kategorie (A, B) zu Unterdaten (Log_A, Log_B),
- Separates Ablegen aller erstellten Unterdaten (Log_A, Log_B) sowie
- Einrichten einer spezifischen Zugriffsmöglichkeit separat für die jeweiligen Unterdaten (Log_A, Log_B) in Abhängigkeit vorbestimmter Benutzergruppen.

2. Verfahren nach Anspruch 1, wobei die im Computersystem (1) erzeugten Ereignisprotokoll-Daten (Log_A_B) aus zumindest einer Ereignisprotokoll-Datei ausgelesen werden.

3. Verfahren nach Anspruch 1 oder 2, wobei die erstellten Unterdaten (Log_A, Log_B) lokal im Computersystem (1) gespeichert und/oder über eine Netzwerk-Infrastruktur an ein weiteres Computersystem (6, 8) verteilt werden.

4. Verfahren nach einem der Ansprüche 1 bis 3, wobei die erstellten Unterdaten (Log_A, Log_B) zumindest einer Kategorie (A, B) verschlüsselt werden.

5. Verfahren nach einem der Ansprüche 1 bis 4, wobei die einzelnen Datenabschnitte (A1, A2, B1, B2) der Ereignisprotokoll-Daten (Log_A_B) anhand wenigstens eines der folgenden Kriterien kategorisiert werden:
- spezifische syntaktische Anweisungen,
- Zeitstempel,
- vordefinierte Begriffe,
- Pattern,
- Variablen,
- Datentypen.

6. Verfahren nach einem der Ansprüche 1 bis 5, wobei die einzelnen Kategorien (A, B) durch unterschiedliche Benutzergruppen und/oder unterschiedliche Zugriffsrechte auf das Computersystem (1) definiert sind.

7. Verfahren nach einem der Ansprüche 1 bis 6, wobei zu jedem Datenabschnitt (A1, A2, B1, B2) jeweils einer Kategorie (A, B) eine Prüfsumme (#A1, #A2, #B1, #B2) gebildet wird.

8. Verfahren nach Anspruch 7, wobei die Prüfsumme (#A1, #A2, #B1, #B2) eines Datenabschnitts (A1, A2, B1, B2) einem nachfolgenden Datenabschnitt (A1, A2, B1, B2) der jeweiligen Kategorie (A, B) angefügt wird.

9. Verfahren nach Anspruch 7 oder 8, wobei zusätzlich zur Prüfsumme (#A1, #A2, #B1, #B2) zu jedem Datenabschnitt (A1, A2, B1, B2) jeweils einer Kategorie (A, B) eine Zufallszahl generiert wird.

10. Computerprogrammprodukt, enthaltend ein Computerprogramm, welches bei Ablauf auf einem Computersystem (1, 6, 8) ein Verfahren nach einem der Ansprüche 1 bis 9 durchführt.

11. Computersystem (1, 6, 8), welches eine Zugriffssteuereinheit (2, 7, 9) zum gesteuerten Zugriff auf Ereignisprotokoll-Daten (Log_A_B) des Computersystems (1, 6, 8) aufweist, wobei die Zugriffssteuereinheit (2, 7, 9) dazu ausgebildet ist, ein Verfahren nach einem der Ansprüche 1 bis 9 durchzuführen.

## Claims

1. A method for the protected deposit of event protocol data (Log_A_B) of a computer system (1), wherein an access control (2, 7, 9) is provided which prohibits access to the event protocol data (Log_A_B) in the computer system (1) and also performs the following steps:
- reading of event protocol data (Log_A_B) generated in the computer system (1),
- sequential assignment of individual data sections (A1, A2, B1, B2) of the read event protocol data (Log_A_B) to one of at least two categories (A, B) depending on predetermined criteria,
- merging of the categorized data sections (A1, A2, B1, B2) of each respective category (A, B) to sub-data (Log_A, Log_B),
- separate deposition of all created sub-data (Log_A, Log_B), as well as
- setting up a specific access option separately for the respective sub-data (Log_A, Log_B) depending on predetermined user groups.

2. The method according to claim 1, wherein the event protocol data (Log_A_B) generated in the computer system (1) are read out from at least one event protocol file.

3. The method according to claim 1 or 2, wherein the created sub-data (Log_A, Log_B) are locally stored in the computer system (1) and/or distributed to a further computer system (6, 8) by a network infrastructure.

4. The method according to one of claims 1 to 3, wherein the created sub-data (Log_A, Log_B) of at least one category (A, B) are encrypted.

5. The method according to one of claims 1 to 4, wherein the individual data sections (A1, A2, B1, B2) of the event protocol data (Log_A_B) are categorized on the basis of at least one the following criteria:
- specific syntactic instructions,
- time stamps,
- predefined terms,
- patterns,
- variables, and
- data types.

6. The method according to one of claims 1 to 5, wherein the individual categories (A, B) are defined by different user groups and/or different access rights to the computer system (1).

7. The method according to one of claims 1 to 6, wherein for each data section (A1, A2, B1, B2) of a respective category (A, B) a checksum (#A1, #A2, #B1, #B2) is generated.

8. The method according to claim 7, wherein the checksum (#A1, #A2, #B1, #B2) of a data section (A1, A2, B1, B2) is added to a subsequent data section (A1, A2, B1, B2) of the respective category (A, B).

9. The method according to claim 7 or 8, wherein in addition to the checksum (#A1, #A2, #B1, #B2) for each data section (A1, A2, B1, B2) of a respective category (A, B) a random number is generated.

10. A computer program product containing a computer program which, when run on a computer system (1, 6, 8), performs the method according to one of claims 1 to 9.

11. A computer system (1, 6, 8) comprising an access control unit (2, 7, 9) for controlled access to event protocol data (Log_A_B) of the computer system (1, 6, 8), wherein the access control unit (2, 7, 9) is adapted to perform a method according to one of claims 1 to 9.

## Revendications

1. Un procédé pour le dépôt sécurisé de données de protocole d'événements (Log_A_B) d'un système informatique (1), dans lequel un contrôle d'accès (2, 7, 9) est prévu qui empêche l'accès aux données de protocole d'événements (Log_A_B) dans le système informatique et également exécute les étapes suivante :
- la lecture de données de protocole d'événements (Log_A_B) générées dans le système informatique (1),
- l'attribution séquentielle de sections de données individuelles (A1, A2, B1, B2) des données de protocole d'événements lues (Log_A_B) à au moins une de deux catégories (A, B) en fonction des critères prédéfinis,
- le regroupement des sections de données classées (A1, A2, B1, B2) de chaque catégorie respective (A, B) en des sous-données (Log_A, Log_B),
- le stockage séparé de tous les sous-données créées (Log_A, Log_B) et également
- la configuration d'une option d'accès spécifique séparée pour les sous-données respectives (Log_A, Log_B), en fonction des groupes d'utilisateurs prédéfinis.

2. Le procédé selon la revendication 1, dans lequel les données de protocole d'événements (Log_A_B) générées dans le système informatique (1) sont lues à partir d'au moins un fichier de protocole d'événements.

3. Le procédé selon la revendication 1 ou 2, dans lequel les sous-données créées (Log_A, Log_B) sont stockées localement dans le système informatique (1) et/ou distribuées vers un autre système informatique (6, 8) à travers une infrastructure de réseau.

4. Le procédé selon une des revendications 1 à 3, dans lequel les sous-données créées (Log_A, Log_B) d'au moins une catégorie (A, B) sont encryptés.

5. Le procédé selon une des revendications 1 à 4, dans lequel les sections de données individuelles (A1, A2, B1, B2) des données de protocole d'événements (Log_A_B) sont classées selon au moins un des critères suivants :
- des instructions syntaxiques spécifiques,
- des horodatages
- des termes prédéfinis
- des modèles
- des variables
- des types de données.

6. Le procédé selon une des revendications 1 à 5, dans lequel les catégories individuelles (A, B) sont définies par des différents groupes d'utilisateurs et/ou différents droits d'accès au système informatique (1).

7. Le procédé selon une des revendications 1 à 6, dans lequel pour chaque section de données (A1, A2, B1, B2) d'une catégorie respective (A, B), une somme de contrôle (#A1, #A2, #B1, #B2) est constituée.

8. Le procédé selon la revendication 7, dans lequel la somme de contrôle (# A1, #A2, #B1, #B2) d'une section de données (A1, A2, B1, B2) est ajoutée à une section suivante de données (A1, A2, B1, B2) de la catégorie respective (A, B).

9. Le procédé selon la revendication 7 ou 8, dans lequel, en plus de la somme de contrôle (#A1, #A2, #B1, #B2) pour chaque section de données (A1, A2, B1, B2) d'une catégorie respective (A, B), un numéro aléatoire est créé.

10. Un produit de logiciel informatique comprenant un logiciel informatique qui, lors qu'il est exécuté dans un système informatique (1, 6, 8), exécute le procédé selon une des revendications 1 à 9.

11. Un système informatique (1, 6, 8) comprenant une unité de contrôle d'accès (2, 7, 9) pour l'accès contrôlé aux données de protocole d'événements (Log_A_B) du système informatique (1, 6, 8), dans lequel l'unité de contrôle d'accès (2, 7, 9) est adaptée pour exécuter un procédé selon une des revendications 1 à 9.
